# EUROPÄISCHE PATENTSCHRIFT

(11) **EP 2 051 357 B1**
(45) Veröffentlichungstag und Bekanntmachung des Hinweises auf die Patenterteilung: **16.12.2009**
(21) Anmeldenummer: 07020466.4
(22) Anmeldetag: 19.10.2007
(51) Int. Cl.: H02M 1/15, H02M 7/5387, H02M 1/44

(54) **Wechselrichter, insbesondere für Photovoltaikanlagen**
Inverter, in particular for solar panel assemblies
Onduleur, en particulier pour installations photovoltaïques

(43) Veröffentlichungstag der Anmeldung: 22.04.2009
(73) Patentinhaber: SMA Solar Technology AG, 34266 Niestetal (DE)
(72) Erfinder: Bremicker, Sven, 36211 Alheim (DE); Greizer, Frank, 43260 Kaufungen (DE); Victor, Matthias, 34266 Niestetal (DE)
(74) Vertreter: Walther, Walther & Hinz GbR

(56) Entgegenhaltungen:
- DE-A1- 10 221 592
- DE-A1-102004 037 446
- DE-A1-102006 010 694
- DE-B3-102004 030 912
- DE-C1- 19 732 218

## Beschreibung

Die Erfindung betrifft einen Wechselrichter zum Umwandeln einer elektrischen Gleichspannung, insbesondere einer Photovoltaik-Gleichspannungsquelle in eine Wechselspannung mit einem Gleichspannungseingang mit zwei Anschlüssen, zwischen denen in paralleler Anordnung eine Brückenschaltung vorgesehen ist, an deren Wechselspannungsausgängen Netzdrosseln vorgesehen sind, und einem Wechselspannungsausgäng mit zwei Anschlüssen.

Die Erfindung ist nicht nur auf Photovoltaikanlagen beschränkt, sondern ist anwendbar auch für Batterien und andere Gleichspannungsgeneratoren.

Bei der Umwandlung von durch Photovoltaikanlagen erzeugten Strom sind sowohl ein hoher Wirkungsgrad aber auch Sicherheitsaspekte wie Schutz vor hohen Spannungen wichtig.

Weil Photovoltaikgeneratoren Gleichspannung erzeugen, muss diese zum Zweck der Einspeisung in ein Energieversorgungsnetz oder in ein Inselnetz in eine netzfrequente Spannung entsprechender Amplitude umgewandelt werden. Dies erfordert einen geeigneten Wechselrichter. Der Wirkungsgrad der Spannungsumwandlung soll möglichst hoch sein, um einen wirtschaftlichen Betrieb der Anlage zu ermöglichen.

Andererseits können Probleme bezüglich gefährlicher Berührungsspannungen auftreten. Bekannt sind Wechselrichter mit galvanischer Trennung mittels Transformator, um solche Sicherheitsprobleme zu vermeiden. Der Einsatz eines Transformators führt jedoch zu zusätzlichen Verlusten und damit zu einem schlechteren Wirkungsgrad.

Weitere Aspekte sind die Kosten, die Lebensdauer und das Gewicht eines Wechselrichters. Transformatoriose Wechselrichter erfüllen diese Anforderungen in nahezu idealer Weise.

Durch die fehlende galvanische Trennung und damit den Wegfall der zusätzlichen Transformatorverluste zwischen DC- und AC-Seite reduziert sich insofern einerseits die Wechselrichtervertustleistung, führt aber andererseits zu Problemen bezüglich der Ableitströme an den Photovoltaikgeneratoren, die zu den hohen Berührungsspannungen an Konstruktionsteilen führen können. Topologiebedingt können entweder große netzfrequente Potentialsprünge oder große hochfrequente Potentialsprünge an der Gleichstromquelle auftreten. Beide Nachteile führen zu erheblichen und eventuell aus Sicherheitsgründen nicht tolerierbaren AC-Ableitströmen aus den Gleichstromgeneratoren in die Umgebung über die unvermeidbaren parasitären Kapazitäten dieser Generatoren gegenüber dem Erdpotential.

Eine transformatorlose Lösung zur Vermeidung kapazitiver Ableitströme ist aus der DE 10 2004 037 446 A1 bekannt. Hierin wird geschildert, dass, wenn man den Transformator bei solaren Standardeinspeisern weglässt, sich dann das Bezugspotential von einem nicht geerdeten Solargenerator zur Erde dynamisch mit den Zerhackerimpulsen der Wechselrichter verändert. Hierbei entstehen kapazitive Ableitströme am Solargenerator, welche einerseits die Solarzellen schädigen können und andererseits gefährliche Berührungsspannungen selbst an der Glasoberfläche von den Solarpaneelen entstehen lassen. Der dort eingesetzte Wechselrichter setzt sich daher aus einem Gleichspannungswandler, der die Gleichspannung in eine auf Erdpotential bezogene symmetrische +/Spannung umsetzt und einem Zerhacker, welcher Wechselspannungsimpulse erzeugt, zusammen. Als Leistungstransistoren können IGBTs und MOSFETs eingesetzt werden.

Eine andere Schaltungsanordnung eines transformatorlosen Wechselrichters für Photovoltaikanlagen ist in der DE 102 21 592 A1 gezeigt und beschrieben. Die Schaltung umfasst eine Brückenschaltung mit zwei Verbindungspfaden, in denen jeweils ein Schalter sowie eine in Reihe geschaltete Diode vorgesehen sind. Hierdurch entstehen Freilaufpfade längs der sich ein Drosselstrom ausbreiten kann. Hierdurch soll der Wirkungsgrad verbessert und der Stromrippel reduziert werden. Durch die zusätzlichen Pfade entsteht für die Dauer des Freilaufs außerdem eine ohmsche Entkopplung zwischen dem Solargenerator und den Wechselspannungsanschlüssen, wodurch hochfrequente Potenzialsprünge am Solargenerator vermieden werden. Die Schalter der Brücke sind vorzugsweise als MOSFETs oder IGBTs ausgeführt.

Ein weiterer transformatorloser Wechselrichter für Photovoltaik-Gleichspannungsquellen ist in der DE 10 2004 030 912 B3 näher ausgeführt. Durch ein der Brücke vorgeschaltetes Entkopplungs-Schaltelement ist ein asymmetrischer Betrieb ohne hochfrequente Störungen möglich. Hierbei werden Schalter mit Netzfrequenz oder hochfrequent betrieben. Im entkoppelten Zustand entsteht ein Freilaufstrom, was durch einen entsprechenden Freilaufkreis ermöglicht wird. Dies erlaubt einen hohen Wirkungsgrad und einen reduzierten Stromrippel. Hierbei wird vorgeschlagen, dass nur die hochfrequent getakteten Schaltelemente als MOSFETs ausgeführt sind. Zwar weisen diese Bauteile prinzipbedingt eine antiparallele Diode auf, die als sogenannte Body-Diode bezeichnet wird, diese Dioden schalten jedoch langsam ein und aus und weisen eine hohe Sperrladung auf. Aus diesem Grund ist es sinnvoll, für die oberen Schalter der Brücke z.B. IGBTs zu verwenden, die mit zusätzlichen antiparallelen diskreten Dioden verschaltet werden, jedoch gegenüber den MOSFETs den Nachteil höherer Verluste haben.

Der Erfindung liegt die Aufgabe zugrunde, einen transformatorlosen Wechselrichter mit höchstem Wirkungsgrad bereitzustellen, ohne dass hochfrequente Störungen und kapazitive Ableitströme auf der Generatorseite auftreten können.

Zur Lösung der Aufgabe wird erfindungsgemäß eine Schaltung vorgeschlagen, bei der ein erster Brückenzweig mit vier in Reihe angeordneten Schaltelementen und ein zweiter Brückenzweig mit zwei in Reihe angeordneten Schaltelementen vorgesehen ist, und dass zwischen dem Wechselspannungsanschluss, der vom zweiten Brückenzweig abgeht, und dem Verbindungspunkt, der den im zweiten Brückenzweig vorgesehenen Schaltern entspricht, und jeweils einem der Verbindungspunkte zwischen den beiden oberen und den beiden unteren Schaltern des ersten Brückzweiges jeweils eine Diode in entgegengesetzter Durchlassrichtung angeschlossen ist, so dass jeweils einer der mittleren Schalter des ersten Brückenzweiges und jeweils eine der Dioden einen Freilaufstrom in einem von der Gleichspannung entkoppeltem Zustand führt.

Weitere vorteilhafte Merkmale und Ausgestaltungen der Erfindung sind in den Unteransprüchen gekennzeichnet.

Der erfindungsgemäße Wechselrichter weist einen sehr hohen Wirkungsgrad (im Testaufbau >= 98,5 %) auf, so dass er für Photovoltaikanlagen optimal ist. Dadurch, dass der erste Brückenzweig mit vier in Reihe angeordneten Schaltelementen versehen ist und die beiden mittleren Schalter mit jeweils einer der zusätzlichen die beiden Brückenzweige verbindenden Dioden einen Freilauf bilden, kann während des Freilaufs eine sehr vorteilhafte ohmsche Entkopplung erreicht werden, so dass der Solargenerator in bestimmten Phasen des inneren elektrischen Energietransports vom Netz isoliert betrieben wird. Die beiden äußeren Schalter werden zur Trennung des Gleichstromkreises benutzt bzw. sind als Entkopplungsschalter ausgeführt. Im Entkopplungszustand wirkt der zusätzliche Dioden aufweisende Freilaufkreis, der einen Freilaufstrom in einem von der Gleichspannung entkoppelten Zustand führt. Hochfrequente Störungen sowie kapazitive Ableitströme am Solargenerator lassen sich somit vermeiden oder werden zumindest erheblich reduziert.

Durch die erfindungsgemäße Schaltungsanordnung ist es möglich, dass für alle Schalter der Anordnung diejenigen mit den derzeit geringsten Verlusten eingesetzt werden können, unabhängig davon, ob bauteilbedingte antiparallele Dioden vorhanden sind oder nicht. Alle Schalter können antiparallele Dioden aufweisen. Sie sind jedoch für die Funktion der Schaltung nicht erforderlich, so dass sie auch entfallen können.

Damit kann für jeden einzelnen Schalter durch geeignete Dimensionierung ein optimaler Betrieb erreicht werden. Dies ist in den bisher in der Literatur beschriebenen Lösungen nicht der Fall.

Diese Schaltungskonfiguration zeichnet sich insbesondere dadurch aus, dass der Freilaufkreis zwei als zusätzliche, beispielsweise diskrete Dioden ausgeführte Bauteile aufweist, die in Reihe geschaltet sind, so dass diese Reihenschaltung parallel zu den netzfrequent getakteten Schaltelementen des ersten Brückenzweiges geschaltet sind, wobei ein zwischen beiden Dioden liegender Knotenpunkt mit dem Wechselspannungsausgang des zweiten Brückenzweiges verbunden ist. Durch diese Maßnahme können sehr schnelle Dioden mit hoher Stromsteilheit di/dt und kleiner Sperrverzugsladung Qrr für den Freilauf eingesetzt werden. Es kann also nicht nur eine Bauteileinsparung bezüglich Dioden und somit Reduzierung der Schaltungskosten auftreten, sondern es ergibt sich auch eine weitere Verbesserung des Wirkungsgrades. Dies ist dann sehr günstig, wenn die Brücke im asynchronen Betrieb arbeitet bzw. wenn ein Teil der Brückenschalter mit Netzfrequenz und ein anderer Teil mit hoher Frequenz getaktet wird.

Durch die Erfindung ist darüber hinaus eine Vereinfachung der Ansteuerung der Schalter möglich und des Weiteren eine weitere Senkung der Herstellungskosten der Wechselrichterschaltung. Dies insbesondere dann, wenn nach einer weiteren bevorzugten Ausführung der Erfindung alle Schaltelemente gleichen Bautyps sind. Vorteilhaft ist außerdem die Integration der Schaltungsanordnung in einem Halbleitermodul.

Die erfindungsgemäße Vermeidung der parasitären Ableitströme am Solargenerator sorgt für eine Erhöhung der Sicherheit für Anlage und Personen. So kann in einfacher Weise verhindert werden, dass die Solarzellen der Photovoltaikmodule beschädigt werden oder sogar gefährliche Berührungsspannungen selbst an der Glasoberfläche von den Solarpaneelen entstehen. Dadurch ist eine bevorzugte Ausführung als transformatorloser Wechselrichter möglich. Ein solcher Wechselrichter hat ein geringes Gewicht, ist kompakt und ist kostengünstig herstellbar.

Die erfindungsgemäße Schaltung kann nicht nur für einphasige Netze, sondern kann auch entsprechend mehrphasig, insbesondere zwei- oder dreiphasig, ausgeführt sein.

Zweckmäßigerweise werden Verluste durch ein Verfahren zum Umwandeln einer elektrischen Gleichspannung in eine Wechselspannung reduziert, bei dem die beiden mittleren Schaltelemente des ersten Brückenzweiges mit Netzfrequenz, insbesondere mit 50Hz oder 60Hz, geschaltet werden, während die beiden äußeren Schaltelemente sowie die beiden Schaltelemente des zweiten Brückenzweiges hochfrequent, insbesondere im kHz-Bereich; zum Beispiel 16 kHz, getaktet werden. Durch asymmetrische Taktierung der Brücke wird ein geringerer Stromrippel und ein höherer Wirkungsgrad erreicht.

Sehr günstig ist es dann, wenn jeweils eines der im ersten Brückenzweig liegenden äußeren Schaltelemente synchron zu jeweils einem der beiden anderen Schaltelemente des zweiten Brückenzweiges hochfrequent getaktet wird. Dies vereinfacht nicht nur die Schalteransteuerung, sondern führt auch zur optimalen Entkopplung von Gleichspannungs- und Wechselspannungsseite sowie zur Reduzierung der Bauteilbelastung.

Um Oberschwingungen an der Wechselspannung am Ausgang des Wechselrichters und damit Verluste an den Drosseln zu minimieren, ist es besonders vorteilhaft, wenn ein Teil der Schaltelemente, insbesondere die hochfrequent getakteten Schaltelemente pulsweitenmoduliert angesteuert werden.

Anhand der Zeichnungen wird die Erfindung nachstehend beispielhaft näher erläutert.
- Fig. 1 zeigt: eine Darstellung einer erfindungsgemäßen Schaltungsanordnung eines Wechselrichters für eine Photovoltaikanlage,
- Fig. 2 zeigt: eine Darstellung der Schaltungsanordnung gemäß Fig. 1, mit einem Stromverlauf für eine positive Halbwelle eines Netzstromes, wobei zwei obere Schalter eines erstens Brückenzweiges und ein unterer Schalter eines zweiten Brückenzweiges geschlossen sind,
- Fig. 3 zeigt: eine Darstellung der Schaltungsanordnung gemäß Fig. 1, mit einem Freilaufstromverlauf für die positive Halbwelle des Netzstromes, wobei nur der obere mittlere Schalter des ersten Brückenzweiges im Freilaufkreis geschlossen ist,
- Fig. 4 zeigt: eine Darstellung der Schaltungsanordnung gemäß Fig. 1, mit einem Stromverlauf für eine negative Halbwelle eines Netzstromes, wobei zwei untere Schalter des ersten Brückenzweiges und ein oberer Schalter des zweiten Brückenzweiges geschlossen sind,
- Fig. 5 zeigt: eine Darstellung der Schaltungsanordnung gemäß Fig. 1, mit einem Freilaufstromverlauf für die negative Halbwelle des Netzstromes, wobei nur der untere mittlere Schalter des ersten Brückenzweiges im Freilaufkreis geschlossen ist,
- Fig. 6 zeigt: eine Darstellung der Schaltungsanordnung mit antiparallelen Dioden pro Schalter, und
- Fig. 7 zeigt: eine Darstellung einer Schaltungsanordnung nach einem Stand der Technik.

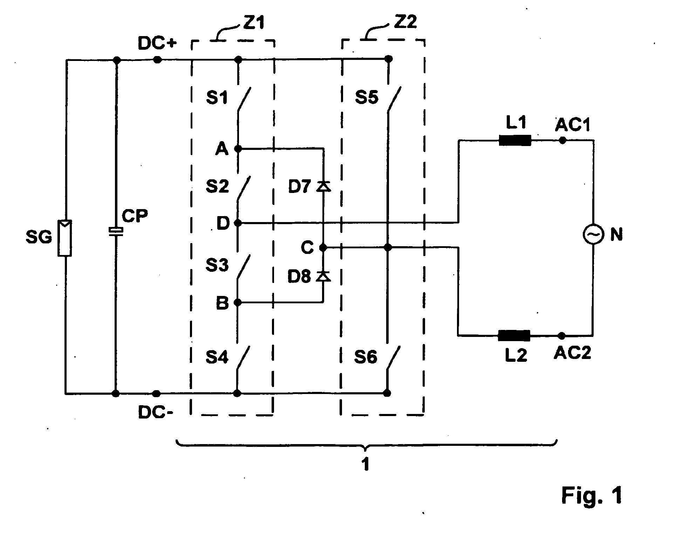

Figur 1 zeigt einen transformatorlosen Wechselrichter 1 mit einem gegenüber dem Stand der Technik deutlich verbesserten Wirkungsgrad und mit geringsten betriebsbedingten Ableitströmen am Solargenerator. In den Figuren 1 bis 7 wurden Schaltsymbole von mechanischen Schaltern gewählt, um das Funktionsprinzip der zu beschreibenden Schaltung besser zu veranschaulichen.

Der Wechselrichter 1 dient zum Umwandeln einer elektrischen Gleichspannung, die ein Photovoltaikgenerator SG liefert, in eine Wechselspannung für ein Stromnetz N. Der Wechselrichter 1 hat einen Gleichspannungseingang mit dem Anschlüssen DC+ und DC- und einen Wechselspannungsausgang mit den Anschlüssen AC1 und AC2.

Dem Generator SG mit einem Pufferkondensator CP als Zwischenkreis ist eine Anordnung nachgeschaltet, die aus sechs Halbleiter-Schaltelementen S1 bis S6 und zwei Dioden D7 und D8 besteht. Die Schaltelemente S1 bis S6 sind so angeordnet, dass zwei Brückenzweige Z1, Z2 entstehen, die parallel zum Generator SG bzw. dem Pufferkondensator CP geschaltet sind. Der erste Brückenzweig Z1 umfasst eine Reihenschaltung der Schaltelemente S1, S2, S3 und S4. Der zweite Brückenzweig Z2 umfasst eine Reihenschaltung der Schaltelemente S5 und S6.

Die Dioden D7 und D8 sind in Reihe geschaltet, wobei sie zwischen Knotenpunkten A und C bzw. C und B angeordnet sind. Der Knotenpunkt A liegt zwischen den beiden oberen Schaltelementen S1, S2 des ersten Zweiges Z1 und verbindet diese in Reihe geschalteten Elemente. Der Knotenpunkt B liegt zwischen den beiden unteren in Reihe geschalteten Schaltelementen S3, S4 im ersten Zweig Z1 und verbindet sie. Der Knotenpunkt C liegt zwischen den Dioden D7, D8 und ist ein Verknüpfungspunkt der in Reihe geschalteten Schaltelemente S5, S6 im zweiten Zweig Z2, wobei dieser Punkt über eine Drossel L2 zum Wechselspannungsausgang AC2 führt, wie in Fig. 1 veranschaulicht ist. Dabei ist die obere bzw. erste Diode D7 so geschaltet, dass ihre Kathode mit dem ersten Knotenpunkt A und ihre Anode mit dem dritten Knotenpunkt C verbunden ist. Die untere bzw. zweite Diode D8 ist so geschaltet, dass ihre Kathode mit dem dritten Knotenpunkt C und ihre Anode mit dem zweiten Knotenpunkt B verbunden ist. Ein vierter Knotenpunkt D liegt zwischen den beiden mittleren Schaltelementen S2, S3 des ersten Zweiges Z1 und ist über die Drossel L1 mit dem Wechselspannungsausgang AC1 verbunden.

An den Knotenpunkten C und D sind also die Wechselstromleitungen angeschlossen, wobei durch zwei Netzdrosseln L1, L2 eine Einspeisung des Wechselstroms über die Wechselspannungsanschlüsse AC1 und AC2 in das Stromnetz bzw. in ein Energieversorgungsnetz erfolgt.

Der Freilaufkreis umfasst jeweils eine der beiden Dioden D7, D8, die als zusätzliche Bauteile ausgeführt und in Reihe geschaltet sind, so dass diese Reihenschaltung parallel zu den Schaltelementen S2, S3 des ersten Brückenzweiges Z1 geschaltet sind sowie jeweils eines der Schaltelemente S2, S3. Hierbei ist jede der Dioden D7, D8 und jedes der Schaltelemente S2, S3 einer Halbwelle zugeordnet. Der zwischen beiden Dioden D7, D8 liegende Knotenpunkt C ist über die Netzdrossel L2 mit dem Wechselspannungsausgang AC2 verbunden. Der zwischen den Schaltelementen S2, S3 liegende Knotenpunkt D ist über die Netzdrossel L1 mit dem Wechselspannungsausgang AC1 verbunden.

Beide mittleren Schaltelemente S2, S3 des ersten Brückenzweigen Z1 werden mit Netzfrequenz, insbesondere mit 50Hz oder 60Hz, geschaltet. Die beiden anderen Schaltelemente S1, S4 des ersten Brückenzweiges Z1 werden hochfrequent, insbesondere im kHz-Bereich, und zwar z. B: mit 16kHz getaktet. Zudem werden die im zweiten Brückenzweig Z2 liegenden Schaltelemente S5,S6 synchron zu den beiden anderen Schaltelementen S1, S4 des ersten Brückenzweiges Z1 hochfrequent, also auch z. B. mit 16kHz getaktet, so dass die Schaltelemente S1, S4, S5 und S6 z. B. mit 16kHz getaktet werden. Zusätzlich ist eine Pulsweitenmodulation vorgesehen.

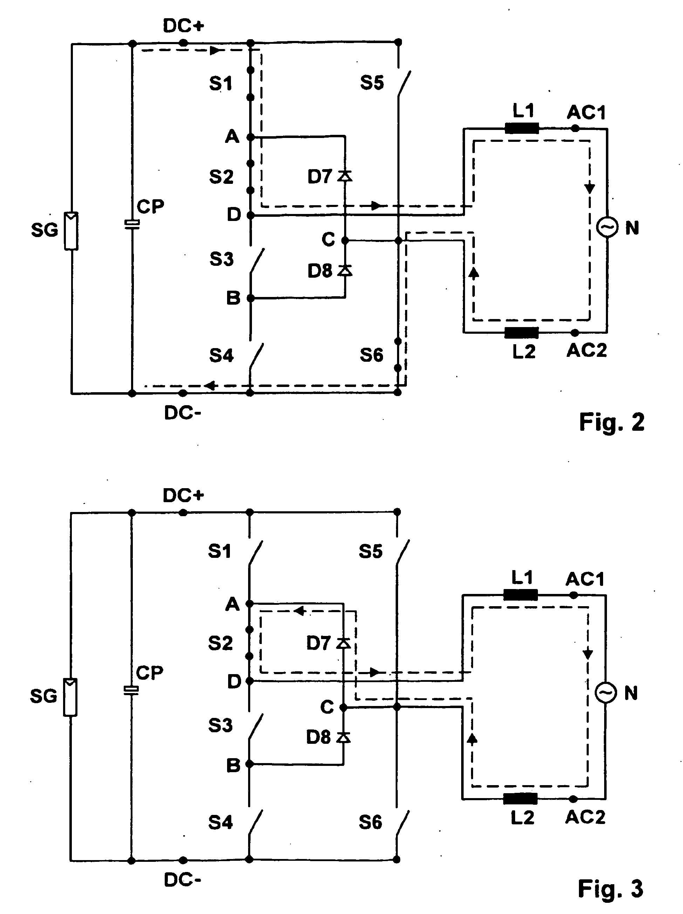

Wie Fig. 2 und Fig. 3 veranschaulichen, ist während der positiven Halbwelle der Netzspannung das Schaltelement S2 geschlossen. Für die Dauer dieser Halbwelle werden die Schaltelemente S1 und S6 synchron und hochfrequent getaktet. Sind die Schaltelemente S1 und S6 geschlossen, dann fließt ein Laststrom. Dieser Stromfluss ist in Fig. 2 gestrichelt eingezeichnet.

In Fig. 3 ist gezeigt, dass der Laststrom nach Öffnen der Schaltelemente S1 und S6 in den Freilaufkreis, der das Schaltelement S2 und die obere Diode D7 umfasst, fließt. Dieser Stromfluss ist ebenfalls in Fig. 3 gestrichelt eingezeichnet, wobei dieser noch der positiven Halbwelle zugeordnet ist.

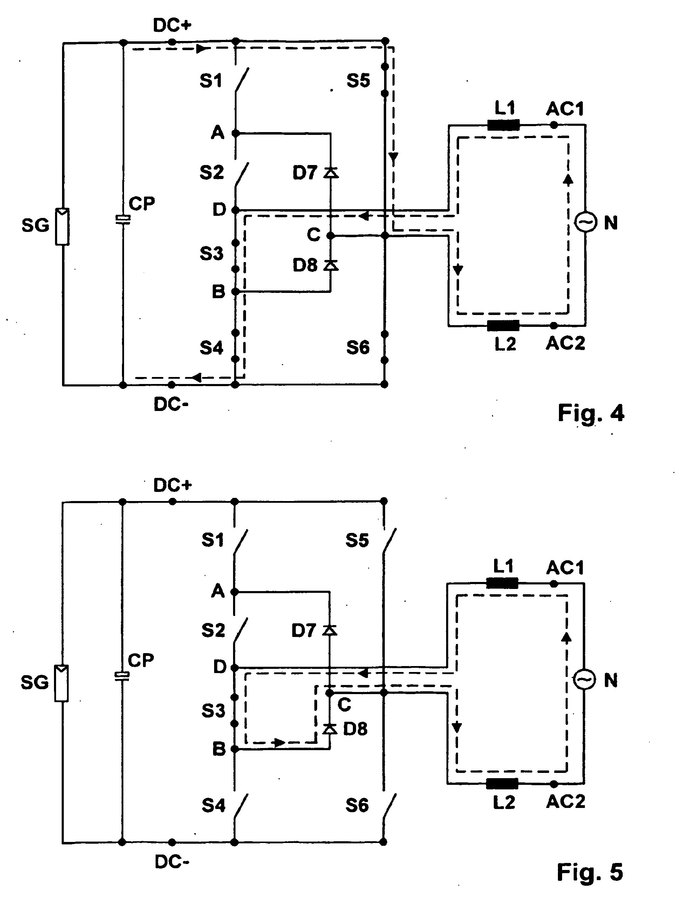

Während der negativen Halbwelle der Netzspannung ist, wie Fig. 4 und Fig. 5 zeigen, das Schaltelement S3 geschlossen, wobei die Schaltelemente S4, S5 synchron und hochfrequent takten. Sind nämlich die Schaltelemente S4, S5 geschlossen, dann fließt der Laststrom, wie in Fig.4 gestrichelt eingezeichnet, durch die Schaltelemente S5, S3 und S4.

Nach dem Öffnen der Schaltelemente S5 und S4 bilden das Schaltelement S3 und die Diode D8 einen Freilaufkreis für den Laststrom, wie sich dies aus Fig. 5 ergibt.

Zweckmäßigerweise werden für die Dioden D7, D8 sehr schnelle Bauelemente, d.h. mit einer hohen Stromsteilheit di/dt, mit geringen Sperrerholverlusten Qrr verwendet. Dadurch entstehen nur geringe Verluste während des Kommutierungsvorgangs.

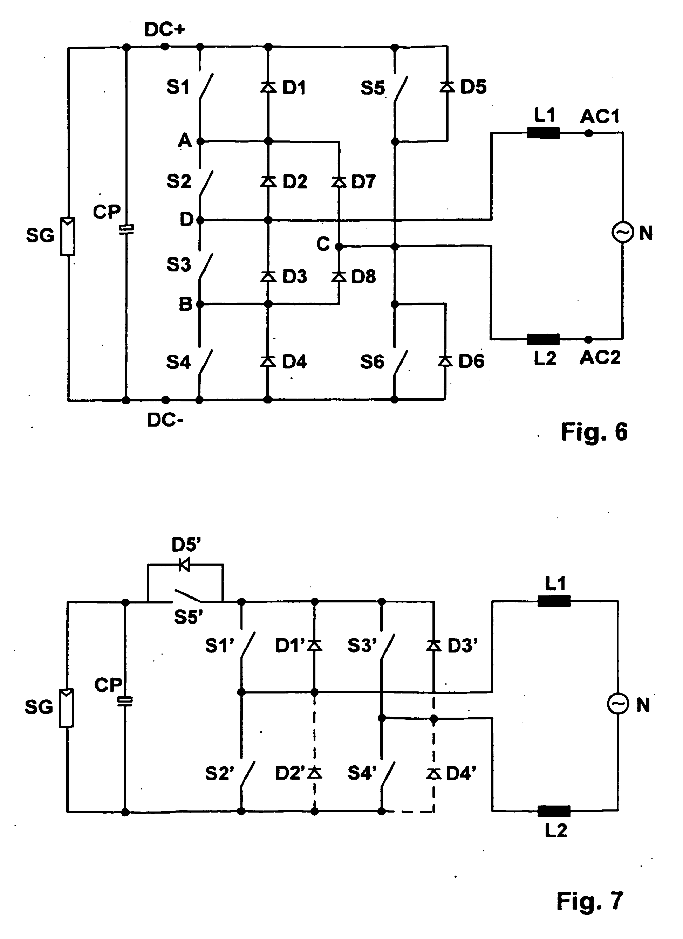

Zwar können prinzipiell alle bekannten Halbleiterschalter, wie beispielsweise MOSFETs, FETs oder IGBTs verwendet werden. Ein besonders hoher Wirkungsgrad wird jedoch erreicht, wenn für alle Schaltelemente S1 bis S6 MOSFETs eingesetzt werden. Diese haben bauteilbedingt interne antiparallele Dioden D1 bis D6, so dass die Schaltung im Grunde weitere Dioden. D1 bis D6 gemäß Fig. 6 umfasst.

Durch diese Schaltungsanordnung besteht die Möglichkeit eines konsequenten Einsatzes nur eines Bautyps modernster Halbleitertechnologie für alle Halbleiter-Schaltelemente S1 bis S6. Das vereinfacht die Integration der Schaltungsanordnung in einem Halbleitermodul, dessen Herstellbarkeit und den Aufwand für die Ansteuerung.

Dadurch, dass MOSFETs mit geringem Einschalt-Widerstand technologiebedingt eine schlechte antiparallele Dioden bzw. Body-Diode aufweisen, konnten die Vorteile der MOSFETs, nämlich ein sehr gutes Schalt- und Durchlassverhalten, bisher nicht genutzt werden, was anhand der Fig. 7 näher erläutert wird.

Die Schalter S2', S4' und S5' werden z.B. mit 16kHz getaktet. Die antiparallelen Dioden D1' bzw. D3' werden, je nach Netzpolarität, in den Freilaufphasen durchströmt. Würden hier die Schalter S1' und S3', die mit 50Hz geschaltet werden, als MOSFETs ausgeführt werden, dann würden die schlechteren technologiebedingten antiparallelen Dioden zu erheblichen Schaltverlusten führen. Daher werden die Schalter S1' und S3' als IGBTs mit einer zusätzlichen antiparallelen Diode eingesetzt. Die IGBTs haben wiederum in dieser Anwendung gegenüber MOSFETs ein schlechteres Schalt- und insbesondere im Teillastbetrieb auch schlechteres Durchlassverhalten. Daher werden in der Praxis nur für die Schalter S2' und S4' MOSFETs verwendet, wobei in Fig. 7 deren Body-Dioden D2', D4' gestrichelt eingezeichnet sind. Für die Funktion der Schaltung sind die Dioden D2' und D4' unerheblich.

Durch die Erfindung kann dieser Nachteil vermieden werden, so dass alle Schalter als MOSFETs ausgeführt sein können. Während des Freilaufs über die Schaltelemente S2 bzw. S3, wie in den Figuren 3 und 5 gezeigt ist, sind die hochfrequent getakteten Schaltelemente S1 und S6 bzw. S4 und S5 geöffnet, so dass der Gleichspannungskreis vom Lastkreis entkoppelt ist. Dies führt zu den geringen betriebsbedingten Ableitströmen.

Die Schaltelemente S2 bzw. S3 können dabei sogar als Parallelschaltung beispielsweisevon MOSFET und IGBT ausgeführt sein, um die Vorteile beider Bauelementtypen im Schwachlast- und Nennlastbereich zu vereinen, ohne Nachteile im Kauf zu nehmen.

### BEZUGSZEICHENLISTE

- 1: Wechselrichter
- SG: Generator
- CP: Pufferkondensator
- L1, L2: Drosseln
- A, B, C, D: Knotenpunkte
- DC+, DC-: Anschlüsse des Gleichspannungseingangs
- AC1, AC2: Anschlüsse des Wechselsparinungsausgangs
- S1 - S6: Schaltelemente
- D1 - D8: Dioden
- N: Netz
- Z1, Z2: Brückenzweige

## Patentansprüche

1. Wechselrichter (1) zum Umwandeln einer elektrischen GleichSpannung, insbesondere einer Photovoltaik-Gleichspannungsquelle in eine Wechselspannung mit einem Gleichspannungseingang mit zwei Anschlüssen (DC+, DC-), zwischen denen in paralleler Anordnung eine Brückenschaltung vorgesehen ist, an deren Wechselspannungsausgängen (C,D) Netzdrosseln (L1,L2) vorgesehen sind, und einen Wechselspannungsausgang mit zwei Anschlüssen (AC1,AC2),
**dadurch gekennzeichnet,**
**dass** ein erster Brückenzweig (Z1) mit mindestens vier in Reihe angeordneten ersten bis vierten Schaltelementen (S1, S2, S3, S4) und ein zweiter Brückenzweig (Z2) mit mindestens einem fünften und einem sechsten Schaltelement (S5,S6) vorgesehen ist, und dass zwischen dem Wechselspannungsausgang (C), der vom zweiten Brückenzweig (Z2) zwischen dem Fünften und sechsten Schaltelement abgeht, und jeweils den Verbindungspunkten (A,B) zwischen den ersten und zweiten bzw. dritten und vierten Schaltelementen (S1,S2 bzw. S3,S4) des ersten Brückenzweiges (Z1), jeweils eine Diode (D7, D8) in entgegengesetzter Durchlassrichtung angeschlossen ist, so dass jeweils einer der mittleren zweiten oder dritten Schalter (S2 oder S3) des ersten Brückenzweiges (Z1) und jeweils eine der Dioden (D7 bzw. D8) einen Freilaufstrom in einem von der Gleichspannung entkoppeltem Zustand führt.

2. Wechselrichter nach einem der vorhergehenden Ansprüche,
**dadurch gekennzeichnet,**
**dass** alle ersten bis sechsten Schaltelemente (S1 - S6) und Dioden (D7,D8) in einem Halbleitermodul integriert sind.

3. Wechselrichter nach einem der vorhergehenden Ansprüche,
**gekennzeichnet durch**
eine Ausführung als transformatorloser Wechselrichter.

4. Wechselrichter nach einem der vorhergehenden Ansprüche,
**gekennzeichnet durch**
eine mehrphasige Ausführung.

5. Ansteuerungsverfahren eines Wechselrichters (1) nach einem der vorhergehenden Ansprüche,
**dadurch gekennzeichnet,**
- **dass** sowohl Ansteuersignale mit Netzfrequenz als auch solche mit einer hohen Taktfrequenz für die ersten bis sechsten Schaltelemente (S1 - S6) der Brückenschaltung vorliegen,
- wobei das zweite Schaltelement (S2) mit Netzfrequenz und das erste und sechste Schaltelement (S1,S6) mit hoher Taktfrequenz während einer Halbwelle der Netzspannung getaktet werden und das dritte Schaltelement (S3) mit Netzfrequenz und die vierten und fünften Schaltelemente (S4,S5) mit hoher Taktfrequenz während der anderen Halbwelle der Netzspannung getaktet werden und
- die ersten, vierten, fünften und sechsten Schaltelemente (S1, S4, S5, S6) derart unsymmetrisch angesteuert werden, dass jeweils das erste oder das vierte Schaltelement (S1, S4) des ersten Brückenzweiges (Z1) angesteuert wird, während das fünfte oder das sechste Schaltelement (S5, S6) des zweiten Brückenzweiges (Z2) mit der gleichen Taktfrequenz getaktet wird und
- **dass** während mindestens einer Freilaufphase ein Freilaufstrom durch das zweite Schaltelement S2 und eine der beiden Dioden (D7) bei der einen Halbwelle der Netzspannung bzw. ein Freilaufstrom durch das dritte Schaltelement S3 und die andere Diode (D8) bei der anderen Halbwelle der Netzspannung fließt, so dass **dadurch** während des Freilaufs der Wechselspannungskreis vom Gleichspannungskreis entkoppelt wird.

6. Ansteuerungsverfahren nach Anspruch 5,
**dadurch gekennzeichnet,**
**dass** die zweiten und dritten Schaltelemente (S2, S3) des ersten Brückenzweigen (Z1) mit Netzfrequenz, insbesondere mit 50Hz oder 60Hz, geschaltet werden, während die beiden anderen ersten und vierten Schaltelemente (S1,S4) des ersten Brückenzweigen (Z1) sowie die fünften und sechsten Schaltelemente (S5, S6) des zweiten Brückenzweiges (Z2) hochfrequent, insbesondere im kHz-Bereich, getaktet werden.

7. Ansteuerungsverfahren nach Anspruch 5,
**dadurch gekennzeichnet,**
**dass** das erste Schaltelement (S1) des ersten Brückenzweiges (Z1) und das sechste Schaltelement (S6) des zweiten Brückenzweiges (Z2) synchron während der einen Halbwelle der Netzspannung getaktet wird und das Schaltelement (S4) des ersten Brückenzweiges (Z1) und das Schaltelement (S5) des zweiten Brückenzweiges (Z2) synchron während der anderen Halbwelle der Netzspannung getaktet wird.

8. Ansteuerungsverfahren nach Anspruch 7,
**dadurch gekennzeichnet,**
**dass** die im ersten Brückenzweig (Z1) liegenden zusätzlichen Schaltelemente synchron zu den beiden anderen fünften und sechsten Schaltelementen (S5, S6) des zweiten Brückenzweiges (Z2) hochfrequent getaktet werden.

9. Ansteuerungsverfahren nach Anspruch 7 oder 8,
**dadurch gekennzeichnet,**
**dass** ein Teil der Schaltelemente, insbesondere die hochfrequent getakteten ersten, zweiten, vierten und fünften Schaltelemente (S1, S2, S4, S5) pulsweitenmoduliert angesteuert werden.

10. Ansteuerungsverfahren nach einem der Ansprüche 5 bis 9
**dadurch gekennzeichnet,**
**dass** die elektrische Gleichspannung durch einen Photovoltaikgenerator erzeugt wird.

## Claims

1. An inverter (1) for converting an electric direct voltage, more specifically of a photovoltaic direct voltage source, into an alternating voltage with a direct voltage input with two terminals (DC+, DC-) between which there is provided a bridge circuit arranged in parallel, grid chokes (L1, L2) being provided at the alternating voltage outputs (C, D) of said bridge circuit, and with an alternating voltage output with two terminals (AC1, AC2),
**characterized in**
**that** there is provided a first bridge branch (Z1) with at least four series connected first through fourth switching elements (S1, S2, S3, S4) and a second bridge branch (Z2) with at least one fifth and one sixth switching element (S5, S6) and that, between the alternating voltage output (C), which takes departure from said second bridge branch (Z2) between the fifth and the sixth switching element and the respective connecting points (A, B) between the first and the second or between the third and the fourth switching element (S1, S2 or S3, S4) of the first bridge branch (Z1) there is respectively connected one diode (D7, D8) in the direction opposite the forward direction so that a respective one of the central second or third switches (S2 or S3) of the first bridge branch (Z1) and a respective one of the diodes (D7 or D8) carries a freewheeling current in a condition decoupled from the direct voltage.

2. The inverter as set forth in any one of the previous claims,
**characterized in**
**that** all the first through sixth switching elements (S1 - S6) and diodes (D7, D8) are integrated in a semiconductor module.

3. The inverter as set forth in any one of the previous claims,
**characterized by**
an implementation as a transformerless inverter.

4. The inverter as set forth in any one of the previous claims,
**characterized by**
a multiple phase implementation.

5. A method of activating an inverter (1) as set forth in any one of the previous claims,
**characterized in**
- **that** both activating signals at mains frequency and such with a high clock frequency are available for the first through sixth switching elements (S1 - S6) of the bridge circuit,
- said second switching element (S2) being clocked at mains frequency and the first and sixth switching element (S1, S6) being clocked at a high clock rate during a half wave of the grid voltage, the third switching element (S3) being clocked at mains frequency and the fourth and fifth switching elements (S4, S5) at a high clock rate during the other half wave of the grid voltage and
- the first, fourth, fifth and sixth switching elements (S1, S4, S5, S6) being activated so asymmetrically that the first or the fourth switching element (S1, S4) of the first bridge branch (Z1) is respectively activated, whilst the fifth or the sixth switching element (S5, S6) of the second bridge branch (Z2) is clocked at the same clock rate and
- **that**, during at least one freewheeling phase, a freewheeling current flows through the second switching element (S2) and one of the two diodes (D7) at the one half wave of the grid voltage or that a freewheeling current flows through the third switching element (S3) and the other diode (D8) at the other half wave of the grid voltage so that the alternating voltage circuit decouples from the direct voltage circuit during freewheeling as a result thereof.

6. The activating method as set forth in claim 5,
**characterized in**
**that** the second and third switching elements (S2, S3) of the first bridge branch (Z1) are connected at mains frequency, in particular at 50Hz or 60Hz, whilst the two other first and fourth switching elements (S1, S4) of the first bridge branch (Z1) as well as the fifth and sixth switching element (S5, S6) of the second bridge branch (Z2) are clocked at high frequency, in particular in the kHz range.

7. The activating method as set forth in claim 5,
**characterized in**
**that** the first switching element (S1) of the first bridge branch (Z1) and the sixth switching element (S6) of the second bridge branch (Z2) are clocked in synchronism during the one half wave of the grid voltage and that the switching element (S4) of the first bridge branch (Z1) and the switching element (S5) of the second bridge branch (Z2) are clocked in synchronism during the other half wave of the grid voltage.

8. The activating method as set forth in claim 7,
**characterized in**
**that** the additional switching elements located in the first bridge branch (Z1) are clocked at high frequency in synchronism with the two other fifth and sixth switching elements (S5, S6) of the second bridge branch (Z2).

9. The activating method as set forth in claim 7 or 8,
**characterized in**
**that** part of the switching elements, in particular the first, second, fourth and fifth switching elements (S1, S2, S4, S5), which are clocked at high frequency, are activated with pulse-width modulation.

10. The activating method as set forth in any one of the claims 5 through 9,
**characterized in**
**that** the electric direct voltage is generated by a photovoltaic generator.

## Revendications

1. Onduleur (1) destiné à convertir une tension électrique continue, notamment d'une source de tension continue photovoltaïque, en une tension alternative avec une entrée tension continue avec deux bornes (DC+, DC-), entre lesquelles est prévu un circuit en pont qui est monté en parallèle et aux sorties tension alternative (C, D) duquel sont prévus des selfs d'alimentation (L1, L2), et avec une sortie de tension alternative avec deux bornes (AC1, AC2),
**caractérisé en ce**
**qu'**une première branche (Z1) de pont avec au moins quatre éléments de commutation, qui, d'un premier élément de commutation jusqu'à un quatrième élément de commutation (S1, S2, S3, S4) sont montés en série, et qu'une deuxième branche (Z2) de pont avec au moins un cinquième et un sixième élément de commutation (S5, S6) est prévue et qu'une diode (D7, D8) respective est raccordée suivant la direction de passage opposée entre la sortie tension alternative (C) qui part de la deuxième branche (Z2) de pont entre le cinquième et le sixième élément de commutation et les points de raccordement (A, B) entre le premier et le deuxième ou entre le troisième et le quatrième élément de commutation (S1, S2 ou S3, S4) de la première branche (Z1) du pont de sorte que dans l'un des commutateurs centraux, le deuxième ou le troisième (S2 ou S3) de la première branche (Z1) du pont, et dans l'une des diodes (D7 ou D8) circule un courant libre dans un état découplé de la tension continue.

2. Onduleur selon l'une quelconque des revendications précédentes,
**caractérisé en ce**
**que** tous les éléments de commutation, du premier jusqu'au sixième, (S1 - S6) et les diodes (D7, D8) sont intégrées dans un module semi-conducteur.

3. Onduleur selon l'une quelconque des revendications précédentes,
**caractérisé par**
une réalisation sous forme d'onduleur sans transformateur.

4. Onduleur selon l'une quelconque des revendications précédentes,
**caractérisé par**
une réalisation à phases multiples.

5. Procédé d'activation d'un onduleur (1) selon l'une quelconque des revendications précédentes,
**caractérisé en ce**
- **que** sont présents tant des signaux d'activation utilisant la fréquence du secteur que ceux utilisant une fréquence d'horloge élevée pour le premier jusqu'au sixième élément de commutation (S1 - S6) du circuit en pont,
- où le deuxième élément de commutation (S2) utilisant la fréquence du secteur et le premier et le sixième élément de commutation (S1, S6) utilisant une fréquence d'horloge élevée sont cadencés pendant une alternance de la tension secteur et où le troisième élément de commutation (S3) utilisant la fréquence du secteur et le quatrième et le cinquième élément de commutation (S4, S5) utilisant la fréquence d'horloge élevée sont cadencés pendant l'autre alternance de la tension secteur et
- où le premier, le quatrième, le cinquième et le sixième élément de commutation (S1, S4, S5, S6) sont activés de manière asymétrique de telle sorte que le premier ou le quatrième élément de commutation (S1, S4) de la première branche (Z1) du pont est activé pendant que le cinquième ou le sixième élément de commutation (S5, S6) de la deuxième branche (Z2) du pont est cadencé à la même fréquence d'horloge et
- **que**, pendant au moins une phase libre, un courant libre passe par le deuxième élément de commutation (S2) et par l'une des deux diodes (D7) pendant l'une des alternances de la tension secteur ou qu'un courant libre passe par le troisième élément de commutation (S3) et par l'autre diode (D8) pendant l'autre alternance de la tension secteur de sorte que le circuit de tension alternative est découplé du circuit de tension continue pendant la phase libre.

6. Procédé d'activation selon la revendication 5,
**caractérisé en ce**
**que** le deuxième et le troisième élément de commutation (S2, S3) de la première branche (Z1) du pont sont commutés à la fréquence secteur, notamment à une fréquence de 50 Hz ou de 60 Hz, tandis que les deux autres éléments de commutation, le premier et le quatrième (S1, S4) de la première branche (Z1) du pont ainsi que le cinquième et le sixième élément de commutation (S5, S6) de la deuxième branche (Z2) du pont, sont cadencés à haute fréquence, notamment dans la plage des kHz.

7. Procédé d'activation selon la revendication 5,
**caractérisé en ce**
**que** la cadence du premier élément de commutation (S1) de la première branche (Z1) du pont et du sixième élément de commutation (S6) de la deuxième branche (Z2) du pont est synchronisée pendant l'une des alternances de la tension secteur et que la cadence de l'élément de commutation (S4) de la première branche (Z1) du pont et de l'élément de commutation (S5) de la deuxième branche (Z2) du pont est synchronisée pendant l'autre alternance de la tension secteur.

8. Procédé d'activation selon la revendication 7,
**caractérisé en ce**
**que** la cadence des éléments de commutation supplémentaires situés dans la première branche (Z1) du pont et celle des deux autres éléments de commutation, le cinquième et le sixième (S5, S6) de la deuxième branche (Z2) du pont, sont synchronisées à haute fréquence.

9. Procédé d'activation selon la revendication 7 ou 8,
**caractérisé en ce**
**qu'**une partie des éléments de commutation, notamment le premier, le deuxième, le quatrième et le cinquième, élément de commutation (S1, S2, S4, S5), qui sont cadencés à haute fréquence, sont activés par modulation d'impulsions en durée.

10. Procédé d'activation selon l'une quelconque des revendications 5 à 9,
**caractérisé en ce**
**que** la tension continue électrique est générée par un générateur photovoltaïque.
